Europäisches Patentamt

European Patent Office

Office européen des brevets

(19)

(11) Publication number: **0 313 763 B1**

# EUROPEAN PATENT SPECIFICATION

(12)

(45) Date of publication of patent specification: **30.10.91**   (51) Int. Cl.⁵: **F01P 11/12, F01N 5/04**

(21) Application number: **88114088.3**

(22) Date of filing: **30.08.88**

(54) Agricultural vehicle having a rotary screen air filter.

(30) Priority: **28.10.87 US 114177**

(43) Date of publication of application:
**03.05.89 Bulletin 89/18**

(45) Publication of the grant of the patent:
**30.10.91 Bulletin 91/44**

(84) Designated Contracting States:
**DE FR GB IT**

(56) References cited:
**DE-A- 2 802 112**   **DE-C- 917 758**
**US-A- 2 795 291**   **US-A- 3 137 553**
**US-A- 3 837 149**   **US-A- 4 178 760**
**US-A- 4 469 490**

(73) Proprietor: **DEERE & COMPANY**
**1 John Deere Road**
**Moline, Illinois 61265(US)**

(72) Inventor: **Choe, Sang H.**
**2930 N. 52nd St. Apt. 111**
**Phoenix Arizona 85018-8014(US)**

(74) Representative: **Feldmann, Bernhard et al**
**DEERE & COMPANY European Office Patent**
**Department Steubenstrasse 36-42**
**W-6800 Mannheim 1(DE)**

## Description

This invention relates to an agricultural vehicle which has an engine, an exhaust system with an exhaust pipe and coupled to the engine, a fan for creating an airstream, a radiator positioned in the airstream, a rotary screen air filter located upstream from the radiator and including a rotatably mounted screen, a vacuum duct extending over an upstream surface of the screen for sucking away from the screen debris material collected thereon, and a suction source operatively associated with the vacuum duct.

In US-A-3,837,149 of the present applicants there is disclosed a device for cleaning away debris as it accumulates on the rotary screen of a rotary air filter. This device consists of a duct which extends radially across the front of the screen, and then into the engine enclosure where it bypasses the radiator and has an open end in communication with the engine driven fan whereby a vacuum is created in the duct by suction from the fan so that the debris filtered out of the cooling air by the filter is sucked off the exterior of the filter screen as the screen rotates past the duct inlet and is carried into the engine compartment where it is discharged upon the surfaces of the engine. While this has proved to be an effective way to clean debris from the screen of the rotary filter, it has the drawback that the discharged debris may create fire hazards, cause alternator plugging or result in engine overheating.

In DE-A-2 802 112 it has been proposed that debris collected in a pre-separator bowl is sucked into an exhaust system of a tractor or the like. For this a portion of the exhaust system is formed as an injector and connected to a vacuum chamber by radial bores. The vacuum chamber surrounding said exhaust system portion is connected by pipes to the bowl. The injector is in fact a conical flow restrictor which generates together with the vacuum chamber only little suction. In addition, the vacuum chamber is space-consuming.

The purpose of the present invention is to provide an improved suction mechanism for agricultural vehicles.

According to the invention the suction source comprises an aspirator located within the exhaust pipe and operable by the exhaust system; the duct is arranged to discharge into the exhaust system; and a further aspirator tube is at one end coupled to the aspirator and at the other to a combustion air pre-cleaner.

By this additional suction is provided for performing a filter cleaning function in addition to a pre-cleaner function. By locating the aspirator within the exhaust pipe no additional space is needed.

By avoiding discharge, of debris from the screen, in the vicinity of the engine but rather causing it to be delivered into the atmosphere with the exhaust gases the problems arising from its deposition on, and proximity to, the engine are obviated.

An embodiment of the invention will now be described with reference to the accompanying diagrammatic drawings in which:

Fig. 1    is a left side elevational view of an agricultural vehicle with which the present invention is particularly useful;

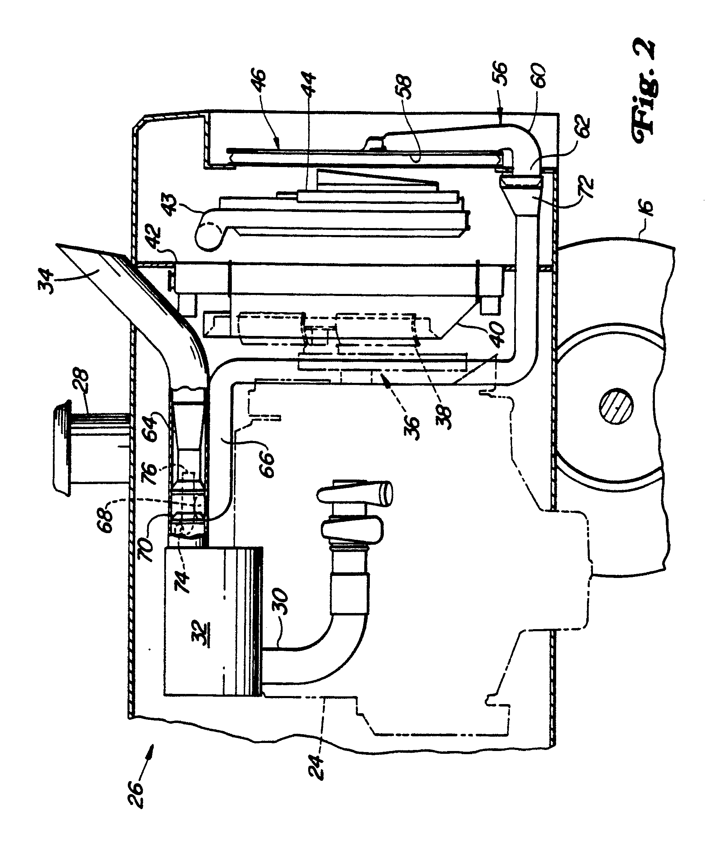

Fig. 2    is a somewhat schematic left side elevational view of the engine compartment area of the vehicle shown in Fig. 1 but with portions of a hood and side panels removed to reveal air cleaning apparatus;

Fig. 3    is a top plan view of the structure shown in Fig. 2; and

Fig. 4    is a left front perspective view of the rear portion of the vehicle showing a door carrying the rotary air filter swung to an open position.

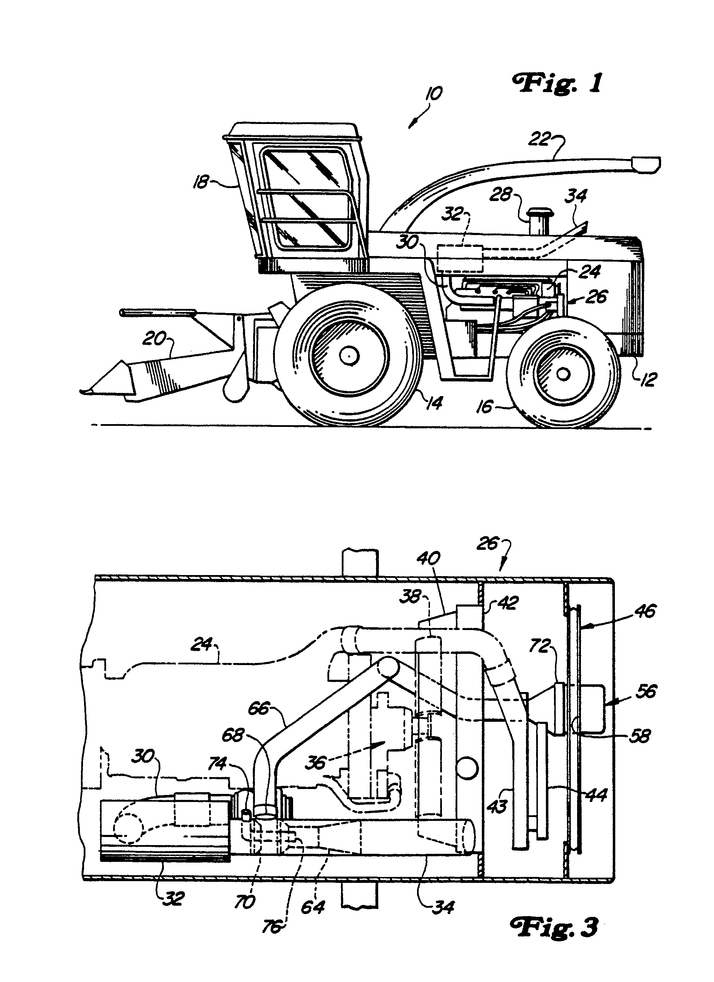

Referring now to Fig. 1 there is shown a self-propelled forage harvester which is an example of the type of agricultural harvesting vehicles for which the present invention finds utility. The ensilage harvester 10 includes a main frame 12 supported on a front set of wheels 14 and on a rear set of wheels 16, only one wheel of each set being shown. Located on the frame 12 is an operator's enclosure 18 which places an operator in good view of a crop harvesting attachment 20 secured to the front end of the frame 12. In a manner well-known in the art, crop gathered by the attachment 20 is chopped into short pieces and then discharged through a discharge spout 22 which directs the material for loading into a wagon or truck or the like. An internal combustion engine 24 is mounted on a rear portion of the frame 12 where the engine is at least partially enclosed by a hood and side panel members which form an engine enclosure or compartment 26. Combustion air for the engine is drawn in through a pre-cleaner 28 which may be of a conventional construction including a bowl which collects airborne material so that it does not enter the engine. Exhaust gases from the engine enter a pipe 30 extending to an inlet of a muffler 32. Exhaust gases are discharged from the muffler through an exhaust or discharge pipe 34.

Located rearwardly of the engine is a cooling system 36. The cooling system 36 includes a fan 38 coupled for being driven by the engine 24 and located within a shroud 40 positioned adjacent a forward face of a radiator 42, the fan acting in a conventional manner to create a stream of cooling air to pass through the radiator so as to remove heat from liquid coolant which circulates through the core of the radiator and the engine block. Positioned behind the radiator so as also to be in the stream of air drawn in by the fan 38 is a hydrostatic oil cooler 44 to which oil for driving hydraulic wheel drive motors (not shown) is circulated.

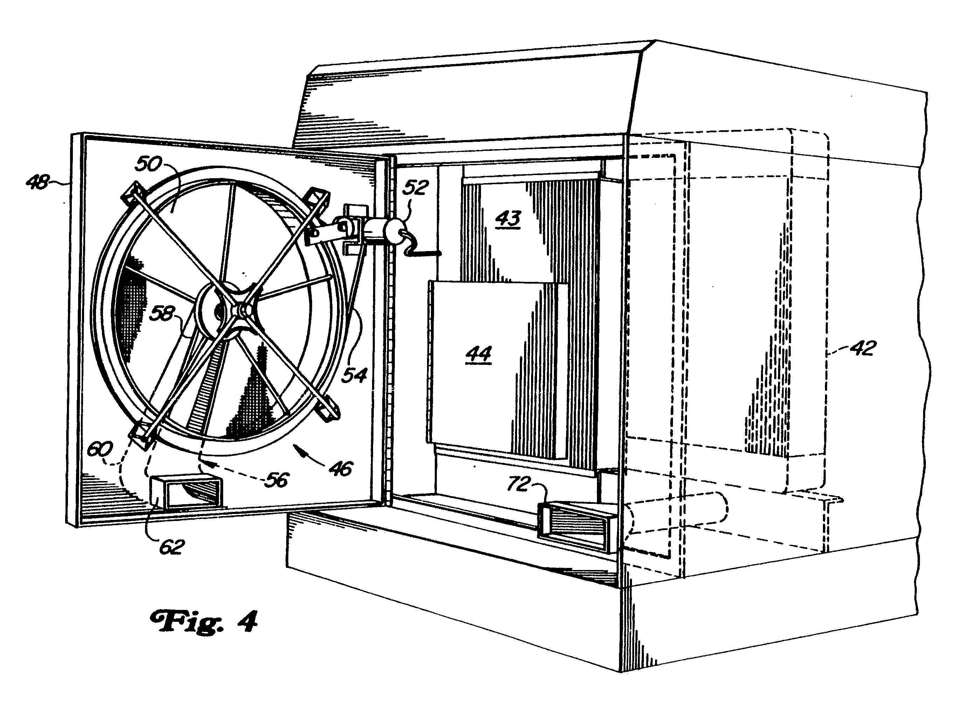

In order to prevent the air passages of the radiator 42 and hydrostatic air cooler 44 from becoming clogged with material carried by the stream of air that is drawn through the radiator and cooler by the fan, there is provided a rotary screen air filter 46. As can best be seen in Fig. 4, the air filter 46 is mounted on a hinged door 48 and includes a rotatably mounted screen 50 to which a drive motor 52 is coupled by a drive belt 54. Debris is prevented from accumulating on the upstream or rearward face of the rotary screen 50 through means of a vacuum device which is in continuous operation any time the engine is operating. Specifically, a vacuum duct 56 having an inlet section 58 extends radially of and is coupled in communication with the rearward or outer face of the rotary screen 50. The vacuum duct inlet section 58 turns forwardly at an elbow 60 and projects forwardly through the door and terminates at a rectangular outlet 62.

A suction force for producing a vacuum action within the duct 56 is effected by an aspirator 64 located within the exhaust pipe 34. The aspirator 64 is coupled to the duct 56 by means of an aspirator tube 66 having a first end 68 joined to the pipe 34 at a location between the aspirator 64 and a conical flow restrictor 70 which has upstream and downstream ends of different diameters joined by a conical surface with the downstream end being the smaller of the ends. A second end of the aspirator tube 66 is defined by a rectangular receptacle 72 which receives the rectangular outlet section 62 of the vacuum duct when the door 48 is closed. For the purpose of evacuating debris from the pre-cleaner 28, an aspirator tube extends from the collecting bowl (not shown) of the pre-cleaner and has its discharge end defined by an L-shaped tube section 74 which enters the exhaust pipe 34 at a location upstream from the conical flow restrictor 70 and then extends axially within the pipe 34 to a terminal end 76 located within the throat of the aspirator 64.

Thus, it will be seen that the exhaust gases are accelerated by the action of the conical flow restrictor 70 and the aspirator 64 so as to cause a suction to be applied to the aspirator tube 66 and the aspirator tube end 74. This suction causes debris to be drawn from the rearward side of the rotary screen 50 as it rotates past the inlet section 58 of the vacuum duct 56 and to be discharged into the stream of exhaust gases discharged by the exhaust pipe 34. Similarly, material collected by the pre-cleaner is drawn through an aspirator tube connected to the pre-cleaner and exhausted through the tube end 74 to be carried by the exhaust gases discharged from the pipe 34.

## Claims

1. An agricultural vehicle which has an engine (24), an exhaust system (30, 32,) with an exhaust pipe (34) and coupled to the engine (24), a fan (38) for creating an airstream, a radiator (42) positioned in the airstream, a rotary screen air filter (46) located upstream from the radiator (42) and including a rotatably mounted screen (50), a vacuum duct (56) extending over an upstream surface of the screen (50) for sucking away from the screen (50) debris material collected thereon, and a suction source operatively associated with the vacuum duct (56) characterised in that the suction source comprises an aspirator (64) located within the exhaust pipe (34) and operable by the exhaust system (30, 32, 34); the duct (56) is arranged to discharge into the exhaust system (30, 32, 34); and a further aspirator tube (74) is at one end coupled to the aspirator (64) and at the other to a combustion air pre-cleaner (28).

2. A vehicle according to claim 1 characterised in that a flow restrictor is located upstream from the aspirator (64) for accelerating exhaust gas flow in a zone between the restrictor (70) and the aspirator (64); and an aspirator tube (66) is at one end coupled to the exhaust pipe (34) at the said zone and at the other to the vacuum duct (56).

3. A vehicle according to claim 2 characterised in that the flow restrictor (70) has upstream and downstream ends of different diameters joined by a conical surface with the downstream end being the smaller of the ends.

## Revendications

1. Véhicule agricole comportant un moteur (24), un système d'échappement (30,32) équipé d'un tuyau d'échappement (34) et accouplé au moteur (24), un ventilateur (38) pour créer un courant d'air, un radiateur (42) positionné dans le courant d'air, un filtre à air (46) à tamis rotatif situé en amont du radiateur (42) et comprenant un tamis monté rotatif (50), un conduit à dépression (56) s'étendant sur une surface amont du tamis (50) pour évacuer par aspiration, à partir du tamis (50), un matériau en forme de débris collecté sur le tamis, et une source de dépression associée de façon opérationnelle au conduit à dépression (56), caractérisé en ce que la source de dépression comprend un dispositif d'aspiration (64) situé à l'intérieur du tuyau d'échappement (34) et pouvant être actionné par le système d'échappement (30,32,34); le conduit (56) est agencé de manière à réaliser une évacuation dans le système d'échappement (30,32,34); et un autre tube (74) du dispositif d'aspiration est accouplé, à une extrémité, au dispositif d'aspiration (64) et, à son autre extrémité, à un dispositif (28) d'épuration préalable de l'air de combustion.

2. Véhicule selon la revendication 1, caractérisé en ce qu'un dispositif d'étranglement de l'écoulement est situé en amont du dispositif d'aspiration (64) de manière à accélérer l'écoulement des gaz d'échappement dans une zone située entre le dispositif d'étranglement (70) et le dispositif d'aspiration (64); et un tube (66) du dispositif d'aspiration est accouplé, par une extrémité, au tuyau d'échappement (34) dans ladite zone et, par son autre extrémité, au conduit à dépression (56).

3. Véhicule selon la revendication 2, caractérisé en ce que le dispositif (70) d'étranglement de l'écoulement comporte des extrémités amont et aval possédant des diamètres différents réunis par une surface conique, l'extrémité aval étant la plus petite des extrémités.

**Patentansprüche**

1. Landwirtschaftliches Fahrzeug, welches einen Motor (24), ein an den Motor (24) angeschlossenes Auspuffsystem (30,32) mit einem Auspuffrohr (34), ein Gebläse (38) zum Erzeugen eines Luftstromes, einen in dem Luftstrom angeordneten Kühler (42), einen stromaufwärts des Kühlers (42) angeordneten Drehsieb-Luftfilter (46) mit einem drehbar montierten Sieb (50), eine Unterdruckleitung (56), die sich über eine stromaufwärts weisende Oberfläche des Siebes (50) erstreckt, um darauf angesammeltes Teilchenmaterial abzusaugen, und eine Saugquelle aufweist, die arbeitsmäßig der Unterdruckleitung (56) zugeordnet ist, dadurch **gekennzeichnet,** daß die Saugquelle eine in dem Auspuffrohr (34) angeordnete Ansaugeinrichtung (64) aufweist, die durch das Auspuffsystem (30,32,34) betätigbar ist, die Leitung (56) so angeordnet ist, daß sie in das Auspuffsystem (30,32,34) ausstößt und daß ein weiteres Ansaugrohr (74) mit einem Ende mit der Ansaugeinrichtung (64) und mit dem anderen Ende mit einem Vorreiniger (28) für die Verbrennungsluft gekuppelt ist.

2. Fahrzeug nach Anspruch 1, dadurch **gekennzeichnet,** daß eine Strömungsdrossel stromaufwärts von der Ansaugeinrichtung (64) angeordnet ist, um die Abgasströmung in einer Zone zwischen der Drossel (70) und der Ansaugeinrichtung (64) zu beschleunigen, und daß ein Ansaugrohr (66) an einem Ende mit dem Auspuffrohr (34) in der genannten Zone und an dem anderen Ende mit der Unterdruckleitung (56) verbunden ist.

3. Fahrzeug nach Anspruch 2, dadurch **gekennzeichnet,** daß die Strömungsdrossel (70) stromaufwärts und stromabwärts liegende Enden von unterschiedlichem Durchmesser aufweist, die über eine konische Fläche miteinander verbunden sind, wobei das stromabwärts liegende Ende das kleinere der beiden Enden ist.

**Fig. 1**

**Fig. 3**

Fig. 2

Fig. 4

EP 0 313 763 B1